(19) Europäisches Patentamt
European Patent Office
Office européen des brevets

(11) **EP 4 593 151 A1**

(12) **EUROPEAN PATENT APPLICATION**
published in accordance with Art. 153(4) EPC

(43) Date of publication:
**30.07.2025 Bulletin 2025/31**

(21) Application number: **23868667.9**

(22) Date of filing: **22.09.2023**

(51) International Patent Classification (IPC):
$H01M\ 10/0587^{(2010.01)}$    $H01M\ 4/525^{(2010.01)}$
$H01M\ 4/505^{(2010.01)}$    $H01M\ 4/62^{(2006.01)}$
$H01M\ 4/38^{(2006.01)}$    $H01M\ 50/107^{(2021.01)}$
$H01M\ 50/131^{(2021.01)}$    $H01M\ 50/533^{(2021.01)}$
$H01M\ 50/538^{(2021.01)}$    $H01M\ 10/052^{(2010.01)}$

(52) Cooperative Patent Classification (CPC):
H01M 4/525; H01M 4/131; H01M 4/364;
H01M 4/505; H01M 4/62; H01M 4/625;
H01M 10/052; H01M 10/0525; H01M 10/0587;
H01M 50/107; H01M 2004/021; H01M 2004/028;
Y02E 60/10; Y02P 70/50

(86) International application number:
**PCT/KR2023/014562**

(87) International publication number:
**WO 2024/063616 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.09.2022 KR 20220121174**

(71) Applicant: **LG Energy Solution, Ltd.
Seoul 07335 (KR)**

(72) Inventors:
• **PARK, Geun Ho**
**Daejeon 34122 (KR)**
• **LEE, Kwan Hee**
**Daejeon 34122 (KR)**
• **LEE, Yun Ju**
**Daejeon 34122 (KR)**
• **PARK, Sung Kwan**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY**

(57) The present invention relates to a secondary battery comprising: an electrode assembly in which a positive electrode plate, a negative electrode plate, and a separator interposed between the positive electrode plate and the negative electrode plate are wound in one direction; a battery can in which the electrode assembly is accommodated; and a sealing body for sealing the open end of the battery can. The positive electrode plate comprises a positive electrode active material layer including a positive electrode active material, a conductive material, and a binder, the positive electrode active material includes lithium nickel-based oxide having at least one of single particle form and quasi-single particle form, and the conductive material includes single-walled carbon nanotubes and bundled carbon nanotubes.

**(Cont. next page)**

[FIG. 3]

**Description**

## TECHNICAL FIELD

The present application claims the benefit of the priority of Korean Patent Application No. 10-2022-0121174, filed on September 23, 2022, which is hereby incorporated by reference in its entirety.

The present invention relates to a lithium secondary battery, and more specifically, to a large capacity lithium secondary battery capable of achieving excellent thermal stability.

## BACKGROUND ART

With the development of technologies such as electric vehicles and portable electronic devices, the demands for lithium secondary batteries as energy sources are rapidly increasing.

The lithium secondary batteries may be classified into can-type batteries such as cylindrical or prismatic, and pouch-type batteries according to the shapes of battery cases. Among these batteries, can-type batteries are made by covering and sealing the top of a battery can with a cap plate after a jelly-roll type electrode assembly is accommodated in the battery can. The jelly-roll type electrode assembly is manufactured by sequentially stacking a positive electrode plate, a separator, and a negative electrode plate, which have a sheet shape, and then winding the stack in one direction. A positive electrode tab and a negative electrode tab, which have a strip shape, are provided in the positive electrode plate and the negative electrode plate, respectively. The positive electrode tab and the negative electrode tab are connected to electrode terminals and thus electrically connected to external power supplies. For reference, a positive electrode terminal is the cap plate, and a negative electrode terminal is the battery can. However, in the can-type battery having the above structure according to the related art, electric current is concentrated on the electrode tab having a strip shape, and thus, resistance increases, a large amount of heat is generated, and current collecting efficiency deteriorates.

Meanwhile, with the recent advancement of vehicle technologies, the demands for high-capacity batteries are increasing. Accordingly, there is a need for developing a large can-type battery having a large volume. In a small cylindrical battery generally used in the related art, that is, a cylindrical battery having a form factor of 1865 or 2170, the capacity thereof is small, and thus, resistance or heat generation has not significantly affected battery performance. However, when the specifications of the small cylindrical battery in the related art are directly applied to a large battery, there may be a serious problem in battery safety.

When the size of a battery increases, amounts of heat and gas generated inside the battery also increase. The temperature and pressure within the battery rise due to the heat and gas, and the battery may ignite or explode. In order to prevent this, the heat and gas within the battery have to be appropriately discharged to the outside. Thus, the cross-sectional area of the battery serving as a path for discharging the heat to the outside of the battery has to increase with the increase in volume. However, since the increment in cross-sectional area is generally less than the increment in volume, the amount of heat generated within the battery increases as the battery becomes larger. Accordingly, the risk of explosion increases, and the output deteriorates. Also, when quick charging is performed at high voltage, a large amount of heat is generated around an electrode tab for a short period of time, and the battery may ignite.

Thus, in order to achieve high capacity, there is a need for developing a can-type battery exhibiting high safety while having a large volume.

## DISCLOSURE OF THE INVENTION

## TECHNICAL PROBLEM

In order to solve the above problems, the present invention provides a lithium secondary battery in which single particles and/or quasi-single particles are applied as a positive electrode active material, and single-walled carbon nanotubes and bundle-type carbon nanotubes are used together as a conductive material, and thus, excellent high-temperature stability and electrochemical characteristics may be achieved even when the volume of the battery increases.

## TECHNICAL SOLUTION

According to one example, the present invention provides a lithium secondary battery including: an electrode assembly in which a positive electrode plate, a negative electrode plate, and a separator interposed between the positive electrode plate and the negative electrode plate are wound in one direction; a battery can in which the electrode assembly is accommodated; and a sealing body which seals an open end of the battery can, wherein the positive electrode plate includes a positive electrode active material layer that includes a positive electrode active material, a conductive material, and a binder, the positive electrode active material includes a lithium nickel-based oxide that has at least one of single particles or quasi-single particles, and the conductive material includes single-walled carbon nanotubes and bundle-type carbon nanotubes.

Here, the secondary battery may be a cylindrical battery having a ratio of form factor of 0.4 or more and may be, for example, a 46110 cell, a 4875 cell, a 48110 cell, a 4880 cell, or a 4680 cell.

Also, in the secondary battery according to the present invention, each of the positive electrode plate and the negative electrode plate may include an uncoated portion in which an active material layer is not formed, and at least a portion of the uncoated portion of the positive electrode plate or negative electrode plate may define an electrode tab.

Specifically, the positive electrode plate-uncoated portion and the negative electrode plate-uncoated portion may be positioned along an end of one side of the positive electrode plate and an end of one side of the negative electrode plate, respectively, which are parallel to a direction in which the electrode assembly is wound. A current collecting plate may be coupled to each of the positive electrode plate-uncoated portion and the negative electrode plate-uncoated portion, and the current collecting plate may be connected to an electrode terminal.

According to another example, the present invention provides: a battery pack including a lithium secondary battery according to the present invention; and a vehicle including the battery pack.

## ADVANTAGEOUS EFFECTS

In a lithium secondary battery according to the present invention, single particles and/or quasi-single particles are applied as a positive electrode active material, and thus, the generation of gas due to breakage of particles when the battery is manufactured and the generation of internal cracks during charging and discharging may be minimized. Accordingly, the excellent safety may be achieved even in a large battery having an increased volume.

Also, the lithium secondary battery according to the present invention may use positive electrode active material powder having a $D_{min}$ of 1.0 $\mu$m or more, and thus the thermal stability of the battery may be further improved. When the particles having a particle diameter of less than 1.0 $\mu$m are included in the positive electrode active material powder, the breakage of particles may increase due to an increase in nip pressure in the rolling process, and the thermal stability may be deteriorated, and thus thermal stability may not be sufficiently secured when applied in the large battery. Therefore, in the present invention, the effect of improving thermal stability may be maximized by using the positive electrode active material powder having the minimum particle size ($D_{min}$) that is controlled to be 1.0 $\mu$m or more.

Also, in the lithium secondary battery according to the present invention, the positive electrode active material powder, in which $D_{50}$, $D_{max}$, and the particle size distribution (PSD) are properly controlled, is applied. Thus, an increase in resistance due to the application of single particle may be minimized, and accordingly, excellent capacity characteristics and output characteristics may be achieved.

Meanwhile, when the positive electrode active material having single particles and/or quasi-single particles is used, distances between positive electrode active material particles increase compared to the case where a positive electrode active material having secondary particles in a bimodal particle size distribution is used. Accordingly, when bundle-type carbon nanotubes generally used in the related art are used as a conductive material, conductive networks are not sufficiently formed between positive electrode active material particles, and thus the electrical conductivity is degraded. In addition, as charging and discharging are repeated, the distances between the positive electrode active material particles are further increased. Thus, the conductive networks are cut off, and the lifespan characteristics are deteriorated. The formation of conductive networks may be increased by increasing the amount of the conductive material to be used, but in this case, the viscosity of positive electrode slurry is increased, and thus the coating processability is degraded. In order to solve the above problems, the present invention may include a mixture of single-walled carbon nanotubes and bundle-type carbon nanotubes having a long average grain size. Thus, the conductive networks between the positive electrode active material particles may be smoothly formed with a relatively small amount of conductive material, and deterioration of lifespan characteristics may be minimized.

Also, in the lithium secondary battery according to the present invention, a silicon-based negative electrode active material having a large capacity may be included as a negative electrode active material. In this case, the higher energy density may be achieved.

Also, in the lithium secondary battery according to the present invention, uncoated portions of a positive electrode plate and a negative electrode plate may serve as electrode tabs. In a can-type battery according to the related art, as a large amount of electric current is concentrated on an electrode tab having a strip shape during charging, a large amount of heat is generated around the electrode tab. In particular, this phenomenon is exacerbated during quick charging, and thus, there is a risk of battery ignition or explosion. On the other hand, according to an embodiment of the present invention, when the uncoated portion not having an active material layer is formed at each of ends of the positive electrode plate and the negative electrode plate and used as the electrode tab, the area through which electric current passes is increased, and electric current concentration is reduced. Thus, the heat generation inside the battery may be effectively reduced, and accordingly, the improvement in the thermal stability of the battery may be obtained.

## BRIEF DESCRIPTION OF THE DRAWINGS

FIG. 1 is a view showing a stacking state before an electrode assembly according to the present invention is wound.
FIG. 2 is a cross-sectional view showing a structure of an electrode plate of an electrode assembly according to an embodiment of the present invention.
FIG. 3 is a cross-sectional view showing a structure of a battery according to an embodiment of the present invention.
FIG. 4 is a cross-sectional view showing a structure of a battery according to another embodiment of the present invention.
FIG. 5 is a view for describing a structure of an electrode assembly according to an example of the present invention.
FIG. 6 is a view for describing a battery pack according to an example of the present invention.
FIG. 7 is a view for describing a vehicle including the battery pack according to one example of the present invention.
FIG. 8 is a measurement image formed by an image analysis management (IMA) system with respect to the cross-section of a positive electrode that is manufactured by Embodiment 1 of the present invention.

## MODE FOR CARRYING OUT THE INVENTION

Hereinafter, the present invention will be described more specifically.

Terms or words used in this specification and claims should not be restrictively interpreted as ordinary meanings or dictionary-based meanings, but should be interpreted as meanings and concepts conforming to the technical spirit of the present invention on the basis of the principle that an inventor can properly define the concept of a term to describe and explain his or her invention in the best ways.

In the present invention, a "primary particle" represents a particle unit that has no observable grain boundary when observed in a field of view at a magnification of 5000x to 20000x using a scanning electron microscope or Electron Back Scatter Diffraction (EBSD). An "average particle diameter of primary particle" represents an arithmetic mean value obtained by measuring and calculating particle diameters of primary particles which are observed in the scanning electron microscope image or EBSD image.

In the present invention, a "secondary particle" is a particle formed by aggregation of a plurality of primary particles. In the present invention, a secondary particle in which no more than 10 primary particles are aggregated is referred to as a quasi-single particle in order to be distinguished from a secondary particle in the related art which is formed by aggregation of several tens to hundreds of primary particles.

In the present invention, "$D_{min}$", "$D_{50}$", and "$D_{max}$" are values of particle sizes in volume accumulation distribution of positive electrode active material powder, which are measured by using a laser diffraction method. Specifically, $D_{min}$ is a minimum particle size shown in the volume accumulation distribution, $D_{50}$ is a particle size when the volume accumulation is 50%, and $D_{max}$ is a maximum particle size shown in the volume accumulation distribution. For example, positive electrode active material powder is dispersed in a dispersion medium, and then input into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, thereby measuring the values of particle sizes in the volume accumulation distribution.

In the present invention, a "specific surface area" is measured by a BET method, and specifically, may be calculated from a nitrogen gas adsorption amount at a liquid nitrogen temperature (77K) using BELSORP-mino II by Bell Japan Inc.

In the present invention, the average grain size of carbon nanotubes represents the particle size at 50% of the volume accumulation measured by using a particle size measurement instrument. For example, carbon nanotubes are dispersed in a solvent such as ethanol to manufacture a sample, and then the sample is mounted to a particle size measurement instrument. Subsequently, the sample may be irradiated with laser to measure the average grain size of the carbon nanotubes.

As a result of repeated studies to develop a large battery having excellent safety and electrochemical characteristics while exhibiting high capacity, the inventors have completed the present invention by finding that the safety and electrical conductivity, and lifespan characteristics of a large battery can be significantly enhanced when a positive electrode active material, which is provided in the form of single particles that are made of one primary particle and/or quasi-single particles that is an aggregate of no more than 10 primary particles, is used as a positive electrode active material, and single-walled carbon nanotubes and bundle-type carbon nanotubes are used together as a conductive material.

Specifically, a lithium secondary battery according to the present invention includes: a electrode assembly in which a positive electrode plate, a negative electrode plate, and a separator interposed between the positive electrode plate and the negative electrode plate are wound in one direction; a battery can in which the electrode assembly is accommodated; and a sealing body which seals an open end of the battery can.

Meanwhile, the positive electrode plate includes a positive electrode active material layer that includes a positive electrode active material, a conductive material, and a binder. The positive electrode active material includes a lithium nickel-based oxide that has at least one of a single particle or quasi-single particle type, and the conductive material includes single-walled carbon nanotubes and bundle-type carbon nanotubes.

Hereinafter, each component of the lithium secondary battery according to the present invention will be described in more detail.

**Electrode assembly**

The electrode assembly is a jelly-roll type electrode assembly having a structure in which the positive electrode plate, the negative electrode plate, and the separator interposed between the positive electrode plate and the negative electrode plate are wound in one direction.

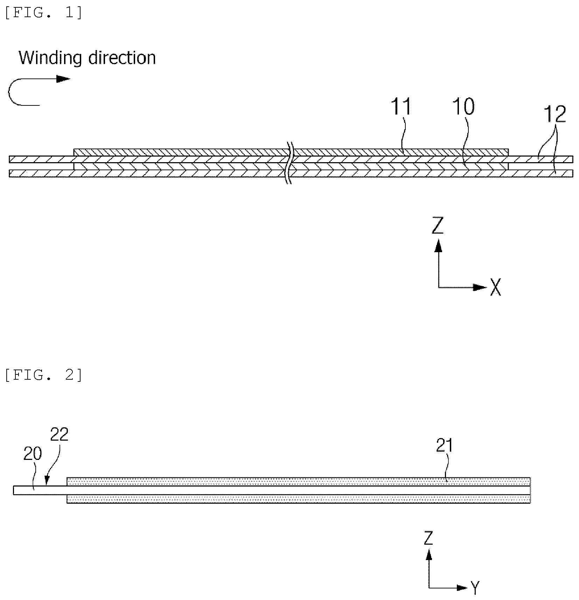

FIG. 1 illustrates a stacking structure before the electrode assembly according to the present invention is wound, and FIG. 2 illustrates a cross-sectional structure of an electrode plate (a positive electrode plate or a negative electrode plate) according to the present invention.

Referring to FIGS. 1 and 2, an electrode assembly of the present invention may be manufactured by winding a stack in one direction X, and the stack is formed by sequentially stacking a separator 12, a positive electrode plate 10, a separator 12, and a negative electrode plate 11 at least one time.

Here, as illustrated in FIG. 2, each of the positive electrode plate 10 and the negative electrode plate 11 has a structure in which an active material layer 21 is formed on a current collector 20 having a long sheet shape, and a partial region of the current collector 20 may have an uncoated portion 22 in which the active material layer 21 is not formed.

As described above, when the positive electrode plate 10 and the negative electrode plate 11 including the uncoated portion 22 are used, it is possible to obtain a battery (for convenience, referred to as 'tab-less') which does not have a separate electrode tab and in which at least a portion of the uncoated portions of the positive electrode plate 10 and the negative electrode plate 11 define electrode tabs.

For example, the uncoated portion 22 may be formed at an end of one side of the current collector 20 and elongated along a winding direction X. A current collecting plate is coupled to each of the positive electrode plate-uncoated portion and the negative electrode plate-uncoated portion, and the current collecting plate is connected to an electrode terminal. Through this, the battery having the tab-less structure may be obtained.

The battery having the tab-less structure may be manufactured through the following method.

First, the separator, the positive electrode plate, the separator, and the negative electrode plate are sequentially stacked such that uncoated portions 22 of the positive electrode plate 10 and the negative electrode plate 11 are positioned in opposite directions, and are then wound in one direction to manufacture a jelly-roll type electrode assembly. Next, the uncoated portions 22 of the positive electrode plate and the negative electrode plate are bent in a direction toward a winding center C, and then, a current collecting plate is welded and coupled to each of the uncoated portion of the positive electrode plate and the uncoated portion of the negative electrode plate. The current collecting plate is connected to an electrode terminal, and accordingly, the battery having the tab-less structure may be manufactured. Meanwhile, the current collecting plate has a larger cross-sectional area than a strip-type electrode tab, and resistance is inversely proportional to the cross-sectional area of a path through which current flows. Thus, when the secondary battery is formed in the structure described above, cell resistance may be significantly reduced.

Meanwhile, the positive electrode plate-uncoated portion and the negative electrode plate-uncoated portion may be processed in a form of a plurality of segments that are independently bendable, and at least a portion of the plurality of segments may be bent toward the winding center C of the electrode assembly.

The segments may be formed by processing the current collectors of the positive electrode plate and the negative electrode plate through metal foil cutting processes such as laser notching, ultrasonic cutting, and punching.

When the uncoated portions of the positive electrode plate and the negative electrode plate are processed into a form of the plurality of segments, stress acting on the uncoated portion when bent may be reduced to prevent deformation or damage to the uncoated portion, thus improving welding characteristics with the current collecting plate.

The current collecting plate and the uncoated portion are generally bonded to each other, for instance, through welding, and in order to enhance the welding characteristics, the uncoated portion has to be bent evenly as much as possible by applying intense pressure to a welding surface of the uncoated portion. However, during this bending process, the shape of the uncoated portion may be irregularly distorted and deformed. The deformed region may come into contact with an electrode of the opposite polarity, causing an internal short-circuit or microcracks in the uncoated portion. However, when the uncoated portions of the positive electrode plate and the negative electrode plate are processed into a form of a plurality of segments independently bendable, stress acting on the uncoated portions during the bending may be relieved, thereby minimizing deformation and damage to the uncoated portions.

In addition, when the uncoated portion is processed in the form of segments as described above, the plurality of segments overlap with each other during the bending, thereby increasing welding strength with the current collecting plate. When advanced technology such as laser welding is used, the laser may penetrate into the electrode assembly and prevent a problem that the separator or the active material are melted and evaporated. Preferably, at least a portion of the plurality of bent segments may be overlapped on an upper end and a lower end of the electrode assembly, and the current collecting plate may be coupled to the plurality of overlapped segments.

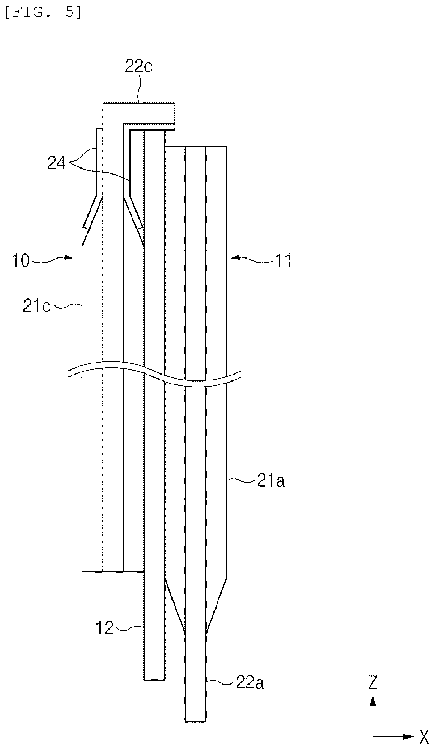

Meanwhile, the electrode assembly according to the present invention may have a structure in which an insulating layer 24 is further formed on a positive electrode plate 10 as illustrated in FIG. 5. Specifically, the insulating layer 24 may be formed to cover a portion of a positive electrode acti ve material layer 21c and a portion of an uncoated portion along a direction parallel to a winding direction of an electrode assembly.

In a case of the battery having the tab-less structure in which an uncoated portion 22c of the positive electrode plate 10 and an uncoated portion 22a of a negative electrode plate 11 are used as electrode tabs, an electrode assembly is formed such that the positive electrode plate 10 may protrude upward from a separator 12 and the negative electrode plate 11 may protrude downward from the separator 12, and the protruding positive electrode plate 10 and/or negative electrode plate 11 are bent and then coupled to a current collecting plate. However, when the positive electrode plate 10 or the negative electrode plate 11 are bent as described above, a current collector of the positive electrode plate 10 or the negative electrode plate 11 crosses the separator and is positioned close to the electrode of the opposite polarity. Due to this, there is a possibility that the positive electrode plate and the negative electrode plate are brought into electrical contact with other and cause an internal short circuit. However, as illustrated in FIG. 5, when the insulating layer 24 covering a portion of the positive electrode active material layer and the uncoated portion is formed, the insulating layer 24 may prevent the positive electrode plate 10 and the negative electrode plate 11 from coming into electrical contact with each other, thereby preventing a short-circuit from occurring inside the battery.

Preferably, the insulating layer 24 may be provided on at least one surface of the current collector of the positive electrode plate 10, preferably, may be provided on each of both surfaces of the positive electrode plate 10.

In addition, the insulating layer 24 may be formed in a region of the positive electrode plate 10 that is likely to face a negative electrode active material layer 21a of the negative electrode plate 11. For example, on a surface facing the negative electrode plate 11 after being bent in the uncoated portion 22c of the positive electrode plate 10, the insulating layer 24 may be formed to extend to a distal end of the uncoated portion 22c. However, for the opposite surface to the surface facing the negative electrode plate 11 after being bent, it is desirable the insulating layer 24 is formed only in a portion of the uncoated portion 22c, for example, before arriving at a bending point of the uncoated portion 22c. This is because, when the insulating layer 24 is formed on the entire region of the uncoated portion on the opposite surface to the surface facing the negative electrode plate 11, electrical contact with the current collecting plate is impossible and thus the uncoated portion cannot function as an electrode tab.

Meanwhile, a material or component of the insulating layer 24 is not particularly limited as long as it can be attached to the positive electrode plate while ensuring insulating performance. For example, the insulating layer may be an insulating coating layer or an insulating tape, and the insulating coating layer may include an organic binder and inorganic particles. Here, the organic binder may be, for example, styrene butadiene rubber (SBR), and the inorganic particles may be alumina oxide, but is not limited thereto.

Next, each of components of the electrode assembly of the present invention will be described in detail.

## (1) Positive electrode plate

The positive electrode plate may have a structure in which a positive electrode active material layer is formed on one surface or both surfaces of a positive electrode current collector having a sheet shape, and the positive electrode active material layer may include a positive electrode active material, a conductive material, and a binder.

Specifically, a positive electrode slurry is manufactured by dispersing the positive electrode active material, the conductive material, and the binder in a solvent such as dimethyl sulfoxide (DMSO), isopropyl alcohol, N-methylpyrrolidone (NMP), acetone, and water. The positive electrode slurry is applied on one surface or both surfaces of the positive electrode current collector having a sheet shape, and the solvent of the positive electrode slurry is removed through a drying process. Then, the positive electrode plate may be manufactured through a rolling process. Meanwhile, during the application of the positive electrode slurry, the positive electrode slurry is not applied to a partial region of the positive electrode current collector, for example, one end of the positive electrode current collector. Through this, the positive electrode plate having the uncoated portion may be manufactured.

Various positive electrode current collectors used in the art may be used as the positive electrode current collector. For example, stainless steel, aluminum, nickel, titanium, baked carbon, or aluminum or stainless steel which is surface-treated with carbon, nickel, titanium, silver, or the like may be used as the positive electrode current collector. The positive electrode current collector may typically have a thickness of 3 $\mu$m to 500 $\mu$m, and fine protrusions and recesses may be formed on the surface of the positive electrode current collector to increase adhesive force of the positive electrode active material. The positive electrode current collector may be used in various forms, for example, films, sheets, foils, nets, porous structures, foams, and non-woven fabrics.

In the present invention, the positive electrode active material includes a lithium nickel-based oxide which has single particles that are made of one primary particle and/or a quasi-single particles that are an aggregate of no more than 10 primary particles.

According to the related art, a spherical secondary particle, in which several tens to hundreds of primary particles are aggregated, has been generally used as a positive electrode active material of a lithium secondary battery. However, regarding the positive electrode active material having the secondary particle type in which lots of primary particles are aggregated as described above, breakage of particles occurs, and the primary particles are peeled off in a rolling process while a positive electrode is manufactured. Also, cracks inside particles are generated during charging and discharging. When the breakage of particles or cracks inside particles of the positive electrode active material occurs, the contact area with an electrolyte increases. Thus, gas generation due to a side reaction with the electrolyte increases. When the gas generation increases inside the battery, the pressure within the battery increases. Thus, there is a risk of battery explosion. Particularly, when the volume of the cylindrical battery increases, an amount of active material inside the battery increases due to the increase in volume. Accordingly, an amount of gas generation also increases significantly, and thus there is a higher risk of ignition and/or explosion of the battery.

On the other hand, the positive electrode active material having a single particle type made of one primary particle and/or quasi-single particles in which no more than 10 primary particles are aggregated has higher particle strength than the existing positive electrode active material having a secondary particle type in which several tens to hundreds of primary particles are aggregated. Thus, particle breakage during the rolling hardly occurs. Also, regarding the positive electrode active material having single particles and/or quasi-single particles, the number of primary particles constituting a particle is small. Thus, a change during charging and discharging due to volume expansion and contraction of primary particles is small, and accordingly, crack generation inside the particles is significantly reduced.

Thus, when the positive electrode active material having single particles and/or quasi-single particles is used, an amount of gas generation due to particle breakage and internal crack generation may be significantly reduced, and accordingly, the excellent safety may be achieved even in the large battery.

Meanwhile, the lithium nickel-based oxide having the single particles and/or the quasi-single particles is present in an amount of 95 wt% to 100 wt%, preferably 98 wt% to 100 wt%, more preferably 99 wt% to 100 wt%, and still more preferably 100 wt%, on the basis of the total weight of the positive electrode active material present in the positive electrode active material layer. When the content of the single particles and/or the quasi-single particles satisfies the above range, sufficient safety may be obtained when applied in the large cylindrical battery. When the positive electrode active material in the form of a secondary particle is included in an amount exceeding 5 wt% of the entire positive electrode active material, side reactions with the electrolyte increase due to the powder generated from secondary particles during electrode manufacturing and charging/discharging, and the effect of suppressing gas generation decreases. Accordingly, the stability improvement effect may be reduced when applied in the large battery.

Meanwhile, in the positive electrode active material in the form of the single particles and/or the quasi-single particles according to the present invention, Dmin may be 1.0 $\mu$m or more, 1.1 $\mu$m or more, 1.15 $\mu$m or more, 1.2 $\mu$m or more, 1.25 $\mu$m or more, 1.3 $\mu$m or more, 1.35 $\mu$m or more, 1.4 $\mu$m or more, 1.45 $\mu$m or more, or 1.5 $\mu$m or more. When $D_{min}$ of the positive electrode active material powder is less than 1.0 $\mu$m, breakage of particles may easily occur due to an increase in nip pressure during a rolling process of the positive electrode plate, and thermal stability may be deteriorated. Thus, thermal stability may not be sufficiently secured when applied in a large battery.

Meanwhile, in terms of resistance and output characteristics, Dmin of the positive electrode active material may be 3 $\mu$m or less, 2.5 $\mu$m or less, or 2 $\mu$m. When $D_{min}$ is too large, the lithium ion diffusion distance within the particles may increase, resulting in deterioration of resistance and output characteristics. For example, $D_{min}$ of the positive electrode active material may be 1.0 $\mu$m to 3 $\mu$m, 1.0 $\mu$m to 2.5 $\mu$m, or 1.3 $\mu$m to 2.0 $\mu$m. Meanwhile, $D_{50}$ of the positive electrode active material may be 5 $\mu$m or less, 4 $\mu$m or less, or 3 $\mu$m or less, for example, 0.5 $\mu$m to 5 $\mu$m, preferably 1 $\mu$m to 5 $\mu$m, more preferably 2 $\mu$m to 5 $\mu$m. In the positive electrode active material having the single particles and/or quasi-single particles, an interface between the primary particles serving as a diffusion path of lithium ions inside the particle is small. Thus, lithium mobility is degraded compared to the positive electrode active material having the secondary particle type, and accordingly, the resistance increases. This increase in resistance is more intensified as the particle size increases. When the resistance increases, capacity and output characteristics are adversely affected. Thus, $D_{50}$ of the positive electrode active material powder may be controlled to be 5 $\mu$m or less to minimize the diffusion distance of lithium ions inside the positive electrode active material particles, thereby suppressing an increase in resistance.

Also, $D_{max}$ of the positive electrode active material may be 12 $\mu$m to 17 $\mu$m, preferably 12 $\mu$m to 16 $\mu$m, more preferably 12 $\mu$m to 15 $\mu$m. When $D_{max}$ of the positive electrode active material satisfies this range, the resistance and capacity characteristics become more excellent. When aggregation between single particles occurs, $D_{max}$ of the positive electrode active material powder increases. When $D_{max}$ of the positive electrode active material powder is too large, the lithium movement path inside the particles is lengthened, and lithium mobility is degraded, which may increase the resistance. Meanwhile, when the excessive crushing occurs, $D_{max}$ of the positive electrode active material powder

decreases. When $D_{max}$ of the positive electrode active material powder is too small, the electrode density of the positive electrode is lowered, and the energy density may be deteriorated.

Meanwhile, a particle size distribution (PSD) of the positive electrode active material is represented by Equation 1 below and may have a value of 3 or less, preferably 2 to 3, more preferably 2.3 to 3:

Particle size distribution (PSD) = $(D_{max}-D_{min})/D_{50}$ [Equation 1].

When the positive electrode active material has the particle size distribution described above, it is possible to appropriately maintain the electrode density of the positive electrode and effectively suppress breakage of particles and an increase in resistance.

In the positive electrode active material, an average particle diameter of primary particles may be 5 $\mu$m or less, 4 $\mu$m or less, 3 $\mu$m or less, or 2 $\mu$m or less, for example, 0.5 $\mu$m to 5 $\mu$m, preferably 1 $\mu$m to 5 $\mu$m, or more preferably 2 $\mu$m to 5 $\mu$m. When the average particle diameter of primary particles satisfies this range, the positive electrode active material having the single particles and/or quasi-single particles exhibiting excellent electrochemical properties may be formed. When the average particle diameter of primary particles is very small, the aggregation number of primary particles forming the positive electrode active material becomes larger, and the effect of suppressing generation of particle breakage during the rolling is degraded. When the average particle diameter of primary particles is very large, the lithium diffusion path inside the primary particle becomes longer, the resistance may increase, and the output characteristics may be degraded.

In the present invention, it is preferable that the positive electrode active material included in the positive electrode active material layer has a unimodal particle size distribution. According to the related art, a bimodal positive electrode active material has been widely used to enhance electrode density of the positive electrode active material layer. A large particle diameter-positive electrode active material having a large average particle diameter and a small particle diameter-positive electrode active material having a small average particle diameter are mixed and used in bimodal positive electrode active material. However, regarding the positive electrode active material having the single particles and/or quasi-single particles, the lithium movement path becomes longer when the particle diameter increases, and thus, the resistance increases significantly. Thus, when particles having a large particle diameter are mixed and used, the capacity and output characteristics may be degraded. Thus, the positive electrode active material having the unimodal distribution is used in the present invention, and thus, an increase in resistance may be minimized.

Meanwhile, the positive electrode active material may include a lithium nickel-based oxide, and specifically, may include a lithium nickel-based oxide that includes 80 mol% or more of Ni on the basis of the total number of moles of transition metal. Preferably, the lithium nickel-based oxide may include Ni in an amount of 80 mol% or more and less than 100 mol%, 82 mol% or more and less than 100 mol%, or 83 mol% or more and less than 100 mol%. When the lithium nickel-based oxide containing high Ni contents is used as described above, high capacity may be achieved.

More specifically, the lithium nickel-based oxide may have a composition represented by Chemical Formula 1 below:

[Chemical Formula 1]      $Li_aNi_bCo_cM^1_dM^2_eO_2$

In Chemical Formula 1, $M^1$ may be Mn, Al, or a combination thereof, preferably Mn or Mn and Al.

$M^2$ may be one or more selected from the group consisting of Zr, W, Y, Ba, Ca, Ti, Mg, Ta, and Nb, preferably one or more selected from the group consisting of Zr, Y, Mg, and Ti, more preferably Zr, Y, or a combination thereof. The $M^2$ element is not necessarily included, but may serve to promote grain growth during firing or improve stability of crystal structure when an appropriate amount thereof is included.

The a represents a mole fraction of lithium in the lithium nickel-based oxide, and it may satisfy that $0.8 \leq a \leq 1.2$, $0.85 \leq a \leq 1.15$, or $0.9 \leq a \leq 1.2$. When the mole fraction of lithium satisfies this range, the crystal structure of the lithium nickel-based oxide may be stably formed.

The b represents a mole fraction of nickel among all metals except for the nickel in the lithium nickel-based oxide, and it may satisfy that $0.8 \leq b < 1$, $0.82 \leq b < 1$, $0.83 \leq b < 1$, $0.85 \leq b < 1$, $0.88 \leq b < 1$ or $0.90 \leq b < 1$. When the mole fraction of nickel satisfies this range, high energy density appears, and it is possible to achieve high capacity.

The c represents a mole fraction of cobalt among all metals except for the nickel in the lithium nickel-based oxide, and it may satisfy that $0 < c < 0.2$, $0 < c < 0.18$, $0.01 \leq c \leq 0.17$, $0.01 \leq c \leq 0.15$, $0.01 \leq c \leq 0.12$ or $0.01 \leq c \leq 0.10$. When the mole fraction of cobalt satisfies this range, favorable resistance characteristics and output characteristics may be achieved.

The d represents a mole fraction of $M^1$ elements among all metals except for the nickel in the lithium nickel-based oxide, and it may satisfy that $0 < d < 0.2$, $0 < d < 0.18$, $0.01 \leq d \leq 0.17$, $0.01 \leq d \leq 0.15$, $0.01 \leq d \leq 0.12$, or $0.01 \leq d \leq 0.10$. When the mole fraction of $M^1$ elements satisfies this range, structural stability of the positive electrode active material appears excellent.

The e represents a mole fraction of $M^2$ elements among all metals except for the nickel in the lithium nickel-based oxide, and it may satisfy that $0 \leq e \leq 0.1$ or $0 \leq e \leq 0.05$.

Meanwhile, the positive electrode active material according to the present invention may further include, on the particle surface of the lithium nickel-based oxide as necessary, a coating layer that includes one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S. Preferably, the coating element may be Al, B, Co, or a combination thereof.

When the coating layer is present on the particle surface of the lithium nickel-based oxide, contact between an electrolyte and a lithium composite transition metal oxide is suppressed by the coating layer. Accordingly, elution of a transition metal due to side reaction with the electrolyte or generation of gas may be reduced.

The positive electrode active material may be included in an amount of 80 wt% to 99 wt% based on the total weight of the positive electrode active material layer, preferably 85 wt% to 99 wt%, more preferably 90 wt% to 99 wt%.

Meanwhile, in the present invention, either (a) single-walled carbon nanotubes or (b) single-walled carbon nanotubes and bundle-type carbon nanotubes are used as a positive electrode conductive material.

When the positive electrode active material having single particles and/or quasi-single particles is utilized, the maximum distance between positive electrode active material particles inside the positive electrode active material layer increases to 2 $\mu$m or more, specifically to 2.5 $\mu$m or more, and more specifically to 3 $\mu$m or more. In one embodiment the maximum distance does not exceed the size of a quasi-single particle. For example, according to the present invention, the distance between the positive electrode active material particles inside the positive electrode active material layer may be 0.5 $\mu$m to 4 $\mu$m and more specifically 0.8 $\mu$m to 4 $\mu$m. In another embodiment, the distance between the positive electrode active material particles inside the positive electrode active material layer may be 0.5 $\mu$m to 5 $\mu$m and more specifically 0.8 $\mu$m to 5 $\mu$m. When the positive electrode active material having the single particles and/or the quasi-single particles is utilized as described above, the distances between the positive active material particles become large. Thus, the contact resistance with the conductive material increases, and the electrical conductivity decreases. Thus, a conductive material content has to increase in order to ensure sufficient electrical conductivity in an electrode in which the positive electrode active material of the single particles and/or quasi-single particles is applied. Specifically, in the case where a positive electrode active material having an existing secondary particle type is applied, proper electrical conductivity may be achieved when a carbon nanotube content in the positive electrode slurry is about 0.4 to 0.6 wt%. However, in the case where the positive electrode active material of the single particles and/or the quasi-single particles is applied, in order to achieve equivalent electrical conductivity, a carbon nanotube content in the positive electrode slurry has to be 0.9 wt% or higher. However, when the carbon nanotube content increases to 0.9 wt% or higher, aggregation occurs within the positive electrode slurry, viscosity increases, and accordingly, coating properties are degraded. Thus, in order to achieve proper coating properties, the viscosity of the positive electrode slurry has to be lowered by reducing a solid content. However, when a solid content in the positive electrode slurry is reduced, an active material content is reduced, and the capacity characteristics are degraded.

In order to solve the above problems, the present invention uses a mixture of single-walled carbon nanotubes and bundle-type carbon nanotubes as the conductive material. Thus, the distances between the positive electrode active material particles having the single particle type may be sufficiently covered while minimizing an amount of the conductive material to be used, and accordingly, excellent coating processability, capacity characteristics, and lifespan characteristics may be achieved.

The single-walled carbon nanotubes have a larger specific surface area and a longer average grain size (length) than multi-walled carbon nanotubes. Thus, when the single-walled carbon nanotubes are used, conductive networks may be formed while sufficiently covering the distances between the positive electrode active material particles.

Specifically, the average grain size of the single-walled carbon nanotubes may be 2 $\mu$m to 8 $\mu$m, preferably 2.5 $\mu$m to 8 $\mu$m, and more preferably 3 $\mu$m to 7 $\mu$m. When the average grain size of the single-walled carbon nanotubes satisfies this range, the distances between the single particles and/or the quasi-single particles may be covered by the single-walled carbon nanotubes, and thus the conductive networks may be smoothly formed.

Also, the single-walled carbon nanotubes may have a BET specific surface area of 500 to 2,000 $m^2$/g, preferably 500 to 1,800 $m^2$/g, and more preferably 700 to 1,600 $m^2$/g. When the specific surface area of the single-walled carbon nanotubes satisfies this range, an excellent effect of improving electrical conductivity may be obtained with only a small amount of single-walled carbon nanotubes.

Meanwhile, the single-walled carbon nanotubes may be present in an amount of 0.001 wt% to 0.04 wt%, preferably 0.005 wt% to 0.03 wt%, and more preferably 0.01 wt% to 0.02 wt%, on the basis of the total weight of the positive electrode active material layer. When the single-walled carbon nanotube content exceeds this range, the coating processability may be degraded because the viscosity of positive electrode slurry increases. Also, when the solid content in the positive electrode slurry is reduced to achieve proper coating properties, the capacity and lifespan characteristics may be deteriorated. When the single-walled carbon nanotube content is less than the above range, the electrical conductivity may be deteriorated because conductive networks are not sufficiently formed, and the lifespan capacity characteristics may be deteriorated because the conductive networks are cut off after cycles are performed. When taking into consideration the lifespan and capacity characteristics, it is particularly preferable that the single-walled carbon nanotube content is 0.02 wt% or less.

Meanwhile, the bundle-type carbon nanotubes represent carbon nanotubes in which a plurality of carbon nanotube units are arranged in a certain direction to form a secondary shape of a bundle or rope, and include a shape in which the bundle or ropes are twisted or intertwined. The bundle-type carbon nanotubes are distinguished from entangled-type carbon nanotubes having a shape in which a plurality of carbon nanotubes are entangled without direction. The average grain size of the bundle-type carbon nanotubes is less than that of the single-walled carbon nanotubes but greater than that of the entangled-type carbon nanotubes.

Specifically, the average grain size of the bundle-type carbon nanotubes may be 0.5 $\mu$m to 5 $\mu$m, preferably 0.7 $\mu$m to 5 $\mu$m, and more preferably 1 $\mu$m to 4 $\mu$m. Also, the bundle-type carbon nanotubes may have a BET specific surface area of 100 to 500 m$^2$/g, preferably 100 to 400 m$^2$/g, and more preferably 200 to 300 m$^2$/g. When the average grain size and specific surface area of the bundle-type carbon nanotubes satisfy these ranges, the conductive networks between the positive electrode active material particles may be formed sufficiently while minimizing the conductive material content, and the viscosity of the positive electrode slurry may be kept low.

Meanwhile, according to the present invention, the bundle-type carbon nanotubes, may be present in an amount of 0.4 wt% to 0.6 wt% on the basis of the total weight of the positive electrode active material layer. When the bundle-type carbon nanotube content is less than the above-described range, the lifespan characteristics decline rapidly. When the bundle-type carbon nanotube content exceeds the above-described range, the viscosity of the positive electrode slurry is increased, and thus the coating processability may be degraded.

Next, the binder serves to enhance attachment between the positive electrode active material particles and an adhesive force between the positive electrode active material and the positive electrode current collector. For specific examples, there may be polyvinylidene fluoride (PVDF), vinylidene-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene-monomer (EPDM rubber), sulfonated EPDM, styrene butadiene rubber (SBR), fluoro rubber, or various copolymers thereof. Among these, any one or a mixture of two or more may be used. The binder may be typically included in an amount of 1 wt% to 30 wt% based on the total weight of the positive electrode active material layer, preferably 1 wt% to 20 wt%, more preferably 1 wt% to 10 wt%.

Meanwhile, on the positive electrode plate according to the present invention, an insulating layer for covering a portion of the positive electrode active material layer and the uncoated portion may be further formed as necessary. The insulating layer may be formed along a direction parallel to a winding direction of an electrode assembly.

## (2) Negative electrode plate

The negative electrode plate may have a structure in which a negative electrode active material layer is formed on one surface or both surfaces of a negative electrode current collector having a sheet shape, and the negative electrode active material layer may include a negative electrode active material, a conductive material, and a binder.

Specifically, a negative electrode slurry is manufactured by dispersing the negative electrode active material, the conductive material, and the binder in a solvent such as dimethyl sulfoxide (DMSO), isopropyl alcohol, N-methylpyrrolidone (NMP), acetone, and water. The negative electrode slurry is applied on one surface or both surfaces of the negative electrode current collector having a sheet shape, and the solvent of the negative electrode slurry is removed through a drying process. Then, the negative electrode plate may be manufactured through a rolling process. Meanwhile, during the application of the negative electrode slurry, the negative electrode slurry is not applied to a partial region of the negative electrode current collector, for example, one end of the negative electrode current collector. Through this, the negative electrode plate having the uncoated portion may be manufactured.

A compound capable of reversibly intercalating and deintercalating lithium may be used as the negative electrode active material. For specific examples of the negative electrode active material, there may be: a carbonaceous material such as artificial graphite, natural graphite, graphitized carbon fibers, and amorphous carbon; a silicon-based material such as Si, Si-Me alloy (where, Me is one or more selected from the group consisting of Al, Sn, Mg, Cu, Fe, Pb, Zn, Mn, Cr, Ti, and Ni), SiO$_y$ (where, 0<y<2), and a Si-C composite; a lithium metal thin film; and a metallic material such as Sn and Al, capable of forming an alloy with lithium. Among these, any one or a mixture of two or more may be used.

Preferably, the negative electrode plate according to the present invention may include a silicon-based negative electrode active material. The silicon-based negative electrode active material may be Si, Si-Me alloy (where, Me is one or more selected from the group consisting of Al, Sn, Mg, Cu, Fe, Pb, Zn, Mn, Cr, Ti, and Ni), SiO$_y$ (where, 0<y<2), a Si-C composite, or a combination thereof, preferably SiO$_y$ (where, 0<y<2). The silicon-based negative electrode active material has a high theoretical capacity. Thus, when the silicon-based negative electrode active material is included, the capacity characteristics may be enhanced.

Meanwhile, the silicon-based negative electrode active material may be doped with M$^b$ metal. Here, the M$^b$ metal may be Group 1 metal elements or Group 2 metal elements, and specifically, may be Li, Mg, or the like. Specifically, the silicon-negative electrode active material may be Si, SiO$_y$ (where, 0<y<2), a Si-C composite, or the like, which is doped with the M$^b$ metal. Regarding the silicon-based negative electrode active material doped with the metal, the capacity of active material is slightly degraded due to the doping elements, but efficiency becomes high. Thus, the high energy density may be achieved.

Also, the silicon-based negative electrode active material may further include a carbon coating layer on the particle surface. Here, an amount of carbon coating may be 20 wt% or less on the basis of the total weight of the silicon-based negative electrode active material, preferably 1 to 20 wt%.

Also, the negative electrode plate may further include a carbon-based negative electrode active material as the negative electrode active material, as necessary. The carbon-based negative electrode active material may be, for example, artificial graphite, natural graphite, graphitized carbon fibers, amorphous carbon, soft carbon, hard carbon, or the like, but is not limited thereto.

Meanwhile, when a mixture of the silicon-based negative electrode active material and the carbon-based negative electrode active material is used as the negative electrode active material, a mixing ratio between the silicon-based negative electrode active material and the carbon-based negative electrode active material may be 1:99 to 20:80, preferably 1:99 to 15:85, more preferably 1:99 to 10:90 in terms of weight.

The negative electrode active material may be included in an amount of 80 wt% to 99 wt% based on the total weight of the negative electrode active material layer, preferably 85 wt% to 99 wt%, more preferably 90 wt% to 99 wt%.

Meanwhile, negative electrode current collectors generally used in the art may be used as the negative electrode current collector. For example, copper, stainless steel, aluminum, nickel, titanium, baked carbon, copper or stainless steel which is surface-treated with carbon, nickel, titanium, or silver, an aluminum-cadmium alloy, or the like may be used. The negative electrode current collector may typically have a thickness of 3 μm to 500 μm, and similar to the positive electrode current collector, fine protrusions and recesses may be formed on the surface of the negative electrode current collector to reinforce adhesive force of the negative electrode active material. For example, various forms such as films, sheets, foils, nets, porous structures, foams, and non-woven fabrics may be used.

The conductive material is used to impart conductivity to a negative electrode and is not particularly limited as long as it has electron electrical conductivity without causing a chemical change in a battery to be constituted. For specific examples, there may be: graphite such as natural graphite and artificial graphite; carbon-based materials such as carbon black, acetylene black, Ketjen black, channel black, furnace black, lamp black, thermal black, a carbon fiber, and a carbon nanotube; metal powder or a metal fiber such as copper, nickel, aluminum, and silver; a conductive whisker such as a zinc oxide and a potassium titanate; a conductive metal oxide such as a titanium oxide; or an electrically conductive polymer such as a polyphenylene derivative. Among these, any one or a mixture of two or more may be used. The conductive material may be typically included in an amount of 1 wt% to 30 wt% based on the total weight of the negative electrode active material layer, preferably 1 wt% to 20 wt%, more preferably 1 wt% to 10 wt%.

The binder serves to enhance attachment between particles of the negative electrode active material and an adhesive force between the negative electrode active material and the negative electrode current collector. For specific examples, there may be polyvinylidene fluoride (PVDF), vinylidene-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene-monomer (EPDM rubber), sulfonated EPDM, styrene butadiene rubber (SBR), fluoro rubber, or various copolymers thereof. Among these, any one or a mixture of two or more may be used. The binder may be typically included in an amount of 1 wt% to 30 wt% based on the total weight of the negative electrode active material layer, preferably 1 wt% to 20 wt%, more preferably 1 wt% to 10 wt%.

**(3) Separator**

The separator separates the negative electrode and the positive electrode and provides a movement passage of lithium ions, and is not particularly limited as long as it is typically used as a separator in a lithium secondary battery. Specifically, porous polymer films, for example, porous polymer films prepared with polyolefin-based polymers such as an ethylene homopolymer, a propylene homopolymer, an ethylene/butene copolymer, an ethylene/hexene copolymer, and an ethylene/methacrylate copolymer may be used as the separator, or a laminate structure having two or more layers thereof may be used. In addition, a conventional porous non-woven fabric, for example, a non-woven fabric which is made of glass fiber having a high melting point, polyethyleneterephthalate fiber, or the like, may be used as a separator. In addition, to ensure thermal resistance or mechanical strength, a coated separator including a ceramic component or a polymer material may be used.

**lithium secondary battery**

Next, the lithium secondary battery according to the present invention will be described.

A battery according to the present invention may include: an electrode assembly having a jelly roll-type structure in which a positive electrode plate, a negative electrode plate, and a separator interposed between the positive electrode plate and the negative electrode plate are wound in one direction; a battery can in which the electrode assembly is accommodated; and a sealing body which seals an open end of the battery can.

Preferably, the lithium secondary battery according to the present invention may be a cylindrical battery, more preferably, large cylindrical battery having a ratio of form factor of 0.4 or more (a value obtained by dividing a diameter of a cylindrical battery by a height, that is, defined as a ratio of a diameter $\Phi$ to a height H). Here, the form factor represents a value that indicates the diameter and height of the cylindrical battery.

The cylindrical battery according to the present invention may be, for example, a 46110 cell (diameter 46 mm, height 110 mm, and form factor ratio 0.418), a 4875 cell (diameter 48 mm, height 75 mm, and form factor ratio 0.640), a 48110 cell (diameter 48 mm, height 110 mm, and form factor ratio 0.436), a 4880 cell (diameter 48 mm, height 80 mm, and form factor ratio 0.600), and a 4680 cell (diameter 46mm, height 80 mm, and form factor ratio 0.575). In numerical values indicating the form factor, the first two numbers indicate the diameter of cell, and the next two or three numbers indicate the height of cell.

In the lithium secondary battery according to the present invention, the positive electrode active material having the single particles and/or quasi-single particles is applied, and thus, the amount of gas generation is significantly reduced when compared to the related art. Accordingly, the excellent safety may be achieved even in the large cylindrical battery having the ratio of form factor of 0.4 or more.

Meanwhile, the battery according to the present invention may be a battery having a tab-less structure not including an electrode tab, preferably, but is not limited thereto.

The battery having the tab-less structure may have, for example, a structure in which each of the positive electrode plate and the negative electrode plate includes an uncoated portion in which the active material layer is not formed. A positive electrode plate-uncoated portion and a negative electrode plate-uncoated portion are positioned in an upper end and a lower end of the electrode assembly, respectively. A current collecting plate is coupled to each of the positive electrode plate-uncoated portion and the negative electrode plate-uncoated portion. The current collecting plate is connected to an electrode terminal.

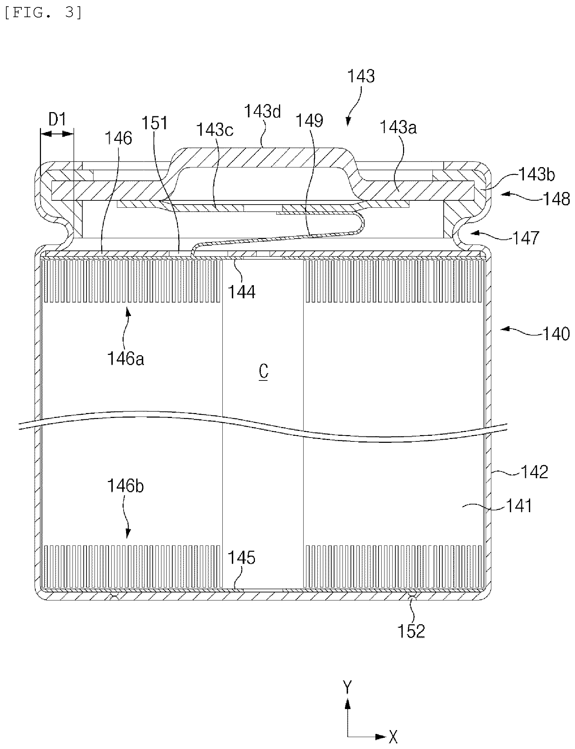

FIG. 3 illustrates a cross-sectional view of the battery having the tab-less structure according to an embodiment of the present invention. Hereinafter, the battery according to an embodiment of the present invention will be described with reference to FIG. 3. However, FIG. 3 merely shows an embodiment of the present invention, and the structure of the battery of the present invention is not limited to the scope illustrated in FIG. 3.

A battery 140 according to an embodiment of the present invention includes an electrode assembly 141 having the jelly-roll type described above, a battery can 142 in which the electrode assembly 141 is accommodated, and a sealing body 143 which seals an open end of the battery can 142.

Here, each of the positive electrode plate and the negative electrode plate of the electrode assembly may include the uncoated portion in which the active material layer is not formed, and may be stacked and wound such that the positive electrode plate-uncoated portion and the negative electrode plate-uncoated portion are positioned in the upper end and the lower end of the electrode assembly, respectively. The electrode assembly has been described above, and thus hereinafter, other components except for the electrode assembly will be described only.

The battery can 142 is a container having an opening formed on the upper side, and made of a conductive metal material such as aluminum or steel. The battery can accommodates the electrode assembly 141 in the inner space through the upper opening, and accommodates an electrolyte together.

As the electrolyte used in the present invention, various electrolytes, which can be used in a lithium secondary battery, for example, an organic liquid electrolyte, an inorganic liquid electrolyte, a solid polymer electrolyte, a gel-like polymer electrolyte, a solid inorganic electrolyte, or a melt inorganic electrolyte may be used. However, the type thereof is not particularly limited.

Specifically, the electrolyte may include an organic solvent and a lithium salt.

The organic solvent is not particularly limited as long as it can serve as a medium in which ions involved in an electrochemical reaction of a battery are migrated. Specifically, an ester-based solvent such as methyl acetate, ethyl acetate, $\gamma$-butyrolactone or $\epsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol, isopropyl alcohol; a nitrile such as R-CN (where R is a linear, branched, or cyclic C2-C20 hydrocarbon group, and may include a double bond, an aromatic ring, or an ether bond); an amide such as dimethylformamide; a dioxolane such as 1,3-dioxolane; or a sulfolane may be used as the organic solvent. Among these, preferably, the carbonate-based solvent is used. More preferably, a mixture of a cyclic carbonate (e.g., ethylene carbonate or propylene carbonate), which has a high ionic conductivity and a high dielectric constant to improve charge/discharge performance of a battery, and a low viscosity linear carbonate-based compound (e.g., ethylmethyl carbonate, dimethyl carbonate, or diethyl carbonate) is used.

The lithium salt is not particularly limited as long as it is a compound capable of providing lithium ions used in a lithium secondary battery. Specifically, $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$,

$LiN(C_2F_5SO_3)_2$, $LiN(C_2F_5SO_2)_2$, $LiN(CF_3SO_2)_2$, LiCl, LiI, $LiB(C_2O_4)_2$, or the like may be used as the lithium salt. The lithium salt may be used at a concentration ranging from 0.1 to 5.0 M, preferably, from 0.1 to 3.0 M. When the concentration of the lithium salt is included within this range, the electrolyte has an appropriate conductivity and viscosity. Thus, excellent electrolyte performance may be achieved, and the lithium ions may effectively migrate.

In addition to these electrolyte components, the electrolyte may further include an additive for the purpose of improving the life characteristics of the battery, suppressing the reduction of the battery capacity, and improving the discharge capacity of the battery. For example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may be used as the additive, and any one or a mixture thereof may be used. However, the additive is not limited thereto. The additive may be included in an amount of 0.1 wt% to 10 wt% based on the total weight of the electrolyte, preferably 0.1 wt% to 5 wt%.

The battery can 142 is electrically connected to an uncoated portion 146b of the negative electrode plate, and contacts an external power source and serves as a negative electrode plate terminal that delivers current, which has been applied from the external power source, to the negative electrode plate.

As necessary, a beading portion 147 and a crimping portion 148 may be provided in the upper end of the battery can 142. The beading portion 147 may be formed by pressing the perimeter of outer circumferential surface of the battery can 142 to a distance D1. The beading portion 147 prevents the electrode assembly 141, which is accommodated inside the battery can 142, from escaping through the upper opening of the battery can 142, and may serve as a support on which the sealing body 143 is seated.

The crimping portion 148 may be formed above the beading portion 147 and has a shape that extends and bends to surround a portion of the outer circumferential surface of a cap plate 143a disposed above the beading portion 147 and a portion of the top surface of the cap plate 143a.

Next, the sealing body 143 is to seal an open end of the battery can 142, and includes a cap plate 143a and a first gasket 143b that provides air-tightness to a space between the cap plate 143a and the battery can 142 and has insulating characteristics, and as necessary, may further include a connection plate 143c electrically and mechanically coupled to the cap plate 143a. The cap plate 143a may be pressed against the beading portion 147 formed in the battery can 142 and fixed by the crimping portion 148.

The cap plate 143a is a component made of a metal material having electrical conductivity and covers the upper opening of the battery can 142. The cap plate 143a is electrically connected to the positive electrode plate of the electrode assembly 141 and electrically insulated from the battery can 142 through the first gasket 143b. Thus, the cap plate 143a may serve as the positive electrode terminal of the secondary battery. The cap plate 143a may include a protrusion portion 143d that protrudes upward from a winding center C. The protrusion portion 143d contacts the external power source and allows the current to be applied from the external power source.

The first gasket 143b may be interposed between the cap plate 143a and the crimping portion 148 to ensure the air-tightness of the battery can 142 and electrical insulation between the battery can 142 and the cap plate 143a.

Meanwhile, the battery 140 according to the present invention may further include current collecting plates 144 and 145 as necessary. The current collecting plates are coupled to a positive electrode plate-uncoated portion 146a and a negative electrode plate-uncoated portion 146b, and connected to the electrode terminals (i.e., a positive electrode terminal and a negative electrode terminal).

Specifically, the battery 140 according to the present invention may include a first current collecting plate 144 coupled to the upper portion of the electrode assembly 141 and a second current collecting plate 145 coupled to the lower portion of the electrode assembly 141.

The first current collecting plate 144 and/or the second current collecting plate 145 may be further included.

The first current collecting plate 144 is coupled to the upper portion of the electrode assembly 141. The first current collecting plate 144 may be made of a conductive metal material such as aluminum, copper, or nickel, and electrically connected to the uncoated portion 146a of the positive electrode plate. A lead 149 may be connected to the first current collecting plate 144. The lead 149 extends upward from the electrode assembly 141, and may be coupled to the connection plate 143c or directly coupled to the bottom surface of the cap plate 143a. The coupling between the lead 149 and other components may be made through welding. Preferably, the first current collecting plate 144 may be formed integrally with the lead 149. In this case, the lead 149 may have a long plate shape that extends outward from the central portion of the first current collecting plate 144.

Meanwhile, the first current collecting plate 144 is coupled to an end of the uncoated portion 146a of the positive electrode plate. This coupling may be made through laser welding, resistance welding, ultrasonic welding, soldering, or the like.

The second current collecting plate 145 is coupled to the lower portion of the electrode assembly 141. The second current collecting plate 145 may be made of a conductive metal material such as aluminum, copper, or nickel, and electrically connected to the uncoated portion 146b of the negative electrode plate. One surface of the second current collecting plate 145 may be coupled to the uncoated portion 146b of the negative electrode plate, and the other surface may be coupled to the inner bottom surface of the battery can 142. Here, this coupling may be made through laser welding, resistance welding, ultrasonic welding, soldering, or the like.

Meanwhile, the battery 140 according to the present invention may further include an insulator 146 as necessary. The insulator 146 may be disposed to cover the top surface of the first current collecting plate 144. The insulator 146 covers the first current collecting plate 144 and thus may prevent the first current collecting plate 144 and the battery can 142 from coming into direct contact with each other.

The insulator 146 includes a lead hole 151 through which the lead 149 extending upward from the first current collecting plate 144 can be drawn out. The lead 149 is drawn out upward through the lead hole 151 and coupled to the bottom surface of the connection plate 143c or the bottom surface of the cap plate 143a.

The insulator 146 may be made of polymer resin having insulating characteristics, for example, a polymer resin material such as polyethylene, polypropylene, polyimide, or polybutylene terephthalate.

Meanwhile, the battery 140 according to the present invention may further include a venting portion 152 formed in the bottom surface of the battery can 142 as necessary. The venting portion 152 corresponds to a region of the bottom surface of the battery can 142, which has a smaller thickness compared to peripheral regions. The venting portion 152 has a small thickness and is thus structurally weak compared to the peripheral regions. Thus, when the pressure within the battery 140 rises to a certain level or higher, the venting portion 152 is ruptured, and the gas within the battery can 142 is discharged to the outside, thereby preventing the battery from exploding.

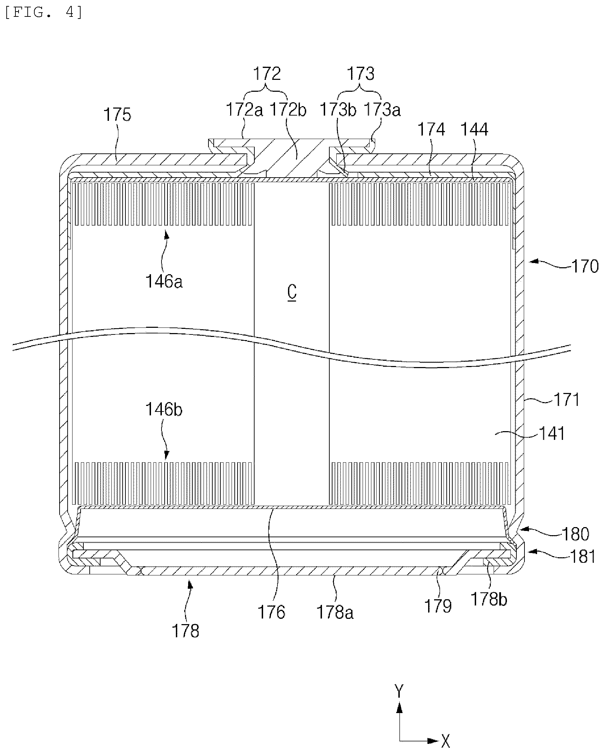

FIG. 4 illustrates a cross-sectional view of a battery having a tab-less structure according to another embodiment of the present invention. Hereinafter, the battery according to another embodiment of the present invention will be described with reference to FIG. 4. However, FIG. 4 merely shows an embodiment of the present invention, and the structure of the battery of the present invention is not limited to the scope illustrated in FIG. 4.

Referring to FIG. 4, a battery 170 according to another embodiment of the present invention is different in structures of a battery can and a sealing body when compared to the battery 140 illustrated in FIG. 3, but the configurations of an electrode assembly and an electrolyte are substantially the same as each other.

Specifically, the battery 170 includes a battery can 171 through which a rivet terminal 172 passes and installed. The rivet terminal 172 is installed on the partially closed surface (the upper surface in the drawing) of the battery can 171, which is partially closed at one distal end thereof. The rivet terminal 172 is riveted in a through-hole (a first opening of a first distal end) of the battery can 171 in a state in which a second gasket 173 having insulating characteristics is interposed therebetween. The rivet terminal 172 is exposed outward in a direction opposite to the direction of gravity.

The rivet terminal 172 includes a terminal exposure portion 172a and a terminal insertion portion 172b. The terminal exposure portion 172a is exposed outward from the partially closed surface of the battery can 171. The terminal exposure portion 172a may be positioned at an approximately central portion of the partially closed surface of the battery can 171. The maximum diameter of the terminal exposure portion 172a may be formed larger than the maximum diameter of the through-hole formed in the battery can 171. The terminal insertion portion 172b passes through the approximately central portion of the partially closed surface of the battery can 171 and may be electrically connected to the uncoated portion 146a of the positive electrode plate. The terminal insertion portion 172b may be rivet-coupled to the inner surface of the battery can 171. That is, the terminal insertion portion 172b may have a shape curved toward the inner surface of the battery can 171. The maximum diameter of an end of the terminal insertion portion 172b may be greater than the maximum diameter of the through-hole of the battery can 171.

The lower end surface of the terminal insertion portion 172b may be welded to the first current collecting plate 144 connected to the uncoated portion 146a of the positive electrode plate. An insulating cap 174 made of an insulating material may be interposed between the first current collecting plate 144 and the inner surface of the battery can 171. The insulating cap 174 covers the upper portion of the first current collecting plate 144 and the upper end edge portion of the electrode assembly 141. Accordingly, it is possible to prevent a short-circuit occurring as an uncoated portion on the outer circumference of the electrode assembly 141 comes into contact with the inner surface of the battery can 171 having different polarity. The terminal insertion portion 172b of the rivet terminal 172 passes through the insulating cap 174 and may be welded to the first current collecting plate 144.

The second gasket 173 is interposed between the battery can 171 and the rivet terminal 172 and prevents electrical contact between the battery can 171 and the rivet terminal 172 which have polarities different from each other. Accordingly, the top surface of the rivet terminal 172 having an approximately flat shape may serve as a positive electrode terminal of the battery 170.

The second gasket 173 includes a gasket exposure portion 173a and a gasket insertion portion 173b. The gasket exposure portion 173a is interposed between the terminal exposure portion 172a of the rivet terminal 172 and the battery can 171. The gasket insertion portion 173b is interposed between the terminal insertion portion 172b of the rivet terminal 172 and the battery can 171. Upon riveting the terminal insertion portion 172b, the gasket insertion portion 173b may be deformed together and come into close contact with the inner surface of the battery can 171. The second gasket 173 may be made of, for example, polymer resin having insulating characteristics.

The gasket exposure portion 173a of the second gasket 173 may have a shape that extends to cover the outer circumferential surface of the terminal exposure portion 172a of the rivet terminal 172. When the second gasket 173 covers the outer circumferential surface of the rivet terminal 172, it is possible to prevent a short-circuit from occurring during a process of coupling an electrical connection component such as a bus bar to the top surface of the battery can 171 and/or the rivet terminal 172. Although not illustrated, the gasket exposure portion 173a may have a shape that extends to cover a portion of the top surface of the terminal exposure portion 172a as well as the outer circumferential surface thereof.

When the second gasket 173 may be made of polymer resin, the second gasket 173 may be coupled to the battery can 171 and the rivet terminal 172 by thermal fusion. In this case, the air-tightness may be reinforced on the coupling interface between the second gasket 173 and the rivet terminal 172 and the coupling interface between the second gasket 173 and the battery can 171. Meanwhile, when the gasket exposure portion 173a of the second gasket 173 has a shape that extends to the top surface of the terminal exposure portion 172a, the rivet terminal 172 may be integrally coupled to the second gasket 173 through insert injection molding.

The remaining regions 175 except for the regions occupied by the rivet terminal 172 and the second gasket 173 on the top surface of the battery can 171 correspond to a negative electrode terminal having a polarity opposite to that of the rivet terminal 172.

A second current collecting plate 176 is coupled to the lower portion of the electrode assembly 141. The second current collecting plate 176 may be made of a conductive metal material such as aluminum, steel, copper, or nickel, and electrically connected to the uncoated portion 146b of the negative electrode plate.

Preferably, the second current collecting plate 176 is electrically connected to the battery can 171. To this end, at least a portion of the edge portion of the second current collecting plate 176 may be interposed and fixed between the inner surface of the battery can 171 and a first gasket 178b. In one example, at least a portion of the edge portion of the second current collecting plate 176 may be fixed, through welding, to a beading portion 180 formed at the lower end of the battery can 171 while being supported by the lower end surface of the beading portion 180. In an modified example, at least a portion of the edge portion of the second current collecting plate 176 may be directly welded to the inner wall surface of the battery can 171.

The second current collecting plate 176 may include a plurality of protrusions and recesses formed radially on the surface facing the uncoated portion 146b. When the protrusions and recesses are formed, the protrusions and recesses may be press-fit into the uncoated portion 146b by pressing the second current collecting plate 176.

Preferably, the second current collecting plate 176 and the end of the uncoated portion 146b may be coupled through welding, for example, laser welding.

A sealing body 178 for sealing the lower open end of the battery can 171 includes a cap plate 178a and a first gasket 178b. The first gasket 178b electrically separates the cap plate 178a from the battery can 171. A crimping portion 181 fixes the edge of the cap plate 178a and the first gasket 178b together. A vent portion 179 is provided in the cap plate 178a. The vent portion 179 has substantially the same configuration as the embodiment described above.

Preferably, the cap plate 178a may be made of a conductive metal material. However, since the first gasket 178b is interposed between the cap plate 178a and the battery can 171, the cap plate 178a has no electrical polarity. The sealing body 178 serves to seal a lower open end of the battery can 171 and discharge gas when the internal pressure of the battery 170 rises to a threshold value or higher.

Preferably, the rivet terminal 172 electrically connected to the uncoated portion 146a of the positive electrode plate is used as a positive electrode terminal. Also, a portion 175 except for the rivet terminal 172 on the upper surface of the battery can 171 electrically connected to the uncoated portion 146b of the negative electrode plate through the second current collecting plate 176 is used as a negative electrode terminal. As described above, when two electrode terminals are positioned on the upper portion of the battery, it is possible to dispose an electrical connection component such as a bus bar only on one side of the battery 170. This may bring simplification of a battery pack structure and enhancement of energy density. Also, the portion 175 used as the negative electrode terminal has an approximately flat shape, and thus, a sufficient bonding area may be secured when the electrical connection component such as the bus bar is bonded. Accordingly, in the battery 170, resistance at a bonding site for the electrical connection component may be reduced to a preferable level.

When the lithium secondary battery is formed in the tab-less structure described above, the current concentration becomes less than a battery having an electrode tab in the related art, and thus, the heat generation inside the battery may be effectively reduced. Accordingly, the improvement in the thermal stability of the battery may be obtained.

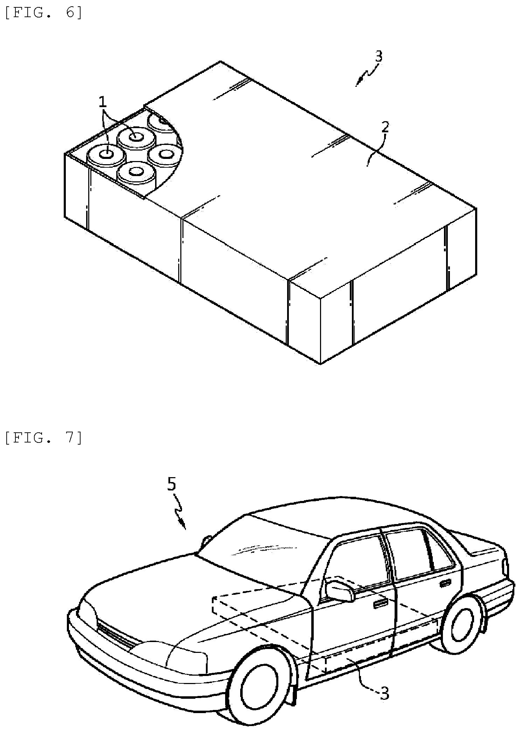

The lithium secondary battery according to the present invention as described above may be used to manufacture a battery pack. FIG. 6 schematically illustrates a configuration of the battery pack according to an embodiment of the present invention. Referring to FIG. 6, a battery pack 3 according to an embodiment of the present invention includes: an assembly in which a secondary batteries 1 are electrically connected; and a pack housing 2 accommodating same. A secondary battery 1 is the battery cell according to the embodiment described above. In the drawing, components such as a bus bar for electrically connecting the secondary batteries 1, a cooling unit, and an external terminal are omitted for convenience of illustration.

The battery pack 3 may be mounted to a vehicle. The vehicle may be, for example, an electric vehicle, a hybrid vehicle, or a plug-in hybrid vehicle. The vehicle includes a four-wheel vehicle or a two-wheel vehicle.

FIG. 7 is a view for describing a vehicle including the battery pack 3 of FIG. 6.

Referring to FIG. 7, a vehicle 5 according to an embodiment of the present invention includes a battery pack 3 according to an embodiment of the present invention, and operates by receiving power from the battery pack 3.

Hereinafter, the present invention will be described in more detail with reference to specific embodiments.

**Embodiment 1**

A positive electrode active material, single-walled CNTs, bundle-type CNTs, and a PVDF binder were mixed in N-methylpyrrolidone at a weight ratio of 97.42:0.01:0.6:1.97. As a result, positive electrode slurry was manufactured.

Here, 100% of $Li[Ni_{0.93}Co_{0.05}Mn_{0.01}Al_{0.01}]O_2$, which has $D_{min}$ of 1.78 $\mu$m, $D_{50}$ of 4.23 $\mu$m and $D_{max}$ of 13.1 $\mu$m and in which single particles and quasi-single particles are mixed, was used as the positive electrode active material.

PD-0521 manufactured by OSCiAL was used as the single-walled CNTs, and the average grain size thereof was 5.0 $\mu$m.

BT1001M-K5 manufactured by LG Chem, Ltd. was used as the bundle-type CNTs, and the average grain size thereof was 3.0 $\mu$m.

The positive electrode slurry was applied on one surface of an aluminum current collector sheet, dried at 120°C, and then rolled. As a result, a positive electrode plate was manufactured.

A negative electrode active material (graphite), a conductive material (super C), styrene butadiene rubber (SBR), and carboxymethyl cellulose (CMC) were mixed in water at a weight ratio of 98.05:0.05:1.0:0.9. As a result, negative electrode slurry was manufactured. The negative electrode slurry was applied on one surface of a copper current collector sheet, dried at 150°C, and then rolled. As a result, a negative electrode plate was manufactured.

A separator was interposed between the positive electrode plate and the negative electrode plate manufactured as described above, and then the separator/positive electrode plate/separator/negative electrode plate were stacked in this order and then wound. As a result, an electrode assembly having a jelly-roll type was manufactured. The electrode assembly manufactured as described above was inserted into a cylindrical battery can, and then, an electrolyte is injected therein. As a result, a 4680 cell was manufactured.

**Embodiment 2**

A 4680 cell was manufactured through the same method as Embodiment 1, except that when positive electrode slurry was manufactured, a positive electrode active material, single-walled CNTs, bundle-type CNTs, and a PVDF binder were mixed at a weight ratio of 97.41:0.02:0.6:1.97.

**Embodiment 3**

A 4680 cell was manufactured through the same method as Embodiment 1, except that when positive electrode slurry was manufactured, a positive electrode active material, single-walled carbon nanotubes, bundle-type carbon nanotubes, and a PVDF binder were mixed at a weight ratio of 97.40:0.03:0.6:1.97.

**Embodiment 4**

A 4680 cell was manufactured through the same method as Embodiment 1, except that when positive electrode slurry was manufactured, a positive electrode active material, single-walled carbon nanotubes, bundle-type carbon nanotubes, and a PVDF binder were mixed at a weight ratio of 97.39:0.04:0.6:1.97.

**Embodiment 5**

A 4680 cell was manufactured through the same method as Embodiment 1, except that when positive electrode slurry was manufactured, a positive electrode active material, single-walled carbon nanotubes, bundle-type carbon nanotubes, and a PVDF binder were mixed at a weight ratio of 97.52:0.01:0.5:1.97.

**Embodiment 6**

A 4680 cell was manufactured through the same method as Embodiment 1, except that when positive electrode slurry was manufactured, a positive electrode active material, single-walled CNTs, bundle-type CNTs, and a PVDF binder were mixed at a weight ratio of 97.61:0.02:0.4:1.97.

**Embodiment 7**

A 4680 cell was manufactured through the same method as Embodiment 1, except that when positive electrode slurry was manufactured, a positive electrode active material, single-walled CNTs, bundle-type CNTs, and a PVDF binder were mixed at a weight ratio of 97.625:0.005:0.4:1.97.

**Comparative Example 1**

A 4680 cell was manufactured through the same method as Embodiment 1, except that when positive electrode slurry was manufactured, a positive electrode active material, bundle-type CNTs, and a PVDF binder were mixed at a weight ratio of 97.63:0.4:1.97 without using single-walled carbon nanotubes.

**Comparative Example 2**

A 4680 cell was manufactured through the same method as Embodiment 1, except that when positive electrode slurry was manufactured, a positive electrode active material, bundle-type CNTs, and a PVDF binder were mixed at a weight ratio of 97.43:0.6:1.97 without using single-walled carbon nanotubes.

**Experimental Example 1: Evaluation of cycle characteristics**

The 4680 cells manufactured by Embodiments and Comparative Examples were charged to 4.2 V by 0.5 C constant current-constant voltage at 25°C and then discharged to 2.5 V by 0.5 C constant current. This process was defined as one cycle, and the charging and discharging were repeated. Then, a capacity retention after 100 cycles and the number of cycles at which a capacity retention reaches 90% were measured.
The measurement results are shown in Table 1 below.

[Table 1]

|  | SWCNT content | B-CNT content | Capacity retention (%) for 100 cycles | Cycles (number) for 90% reach |
|---|---|---|---|---|
| Embodiment 1 | 0.01 | 0.6 | 95 | 165 |
| Embodiment 2 | 0.02 | 0.6 | 91 | 110 |
| Embodiment 3 | 0.03 | 0.6 | 91 | 106 |
| Embodiment 4 | 0.04 | 0.6 | 90 | 105 |
| Embodiment 5 | 0.01 | 0.5 | 87 | 92 |
| Embodiment 6 | 0.02 | 0.4 | 89 | 83 |
| Embodiment 7 | 0.005 | 0.4 | 88 | 85 |
| Comparative Example 1 | 0 | 0.4 | 81 | 50 |
| Comparative Example 2 | 0 | 0.6 | 84.1 | 65 |

As shown in Table 1 above, the lithium secondary batteries of Embodiments 1 to 7, in which the single-walled carbon nanotubes and the bundle-type carbon nanotubes are used together as the conductive material, exhibit superior lifespan characteristics to the batteries of Comparative Examples 1 and 2 in which the bundle-type carbon nanotubes are solely used.

**Experimental Example 2: Check distances between single particles inside active material layer**

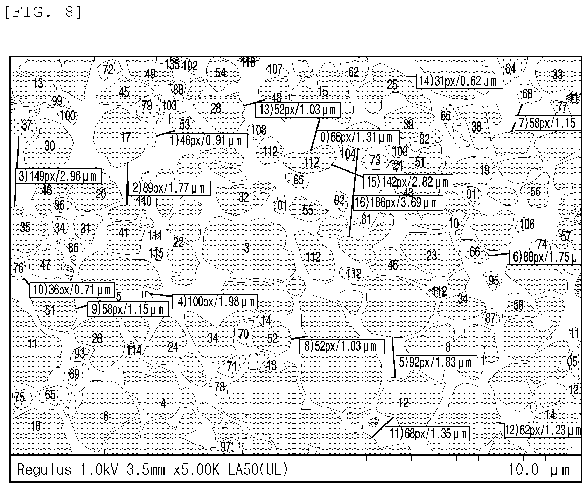

The minimum value (Min.), the maximum value (Max.), and the average value (Avg.) of the distances between positive electrode active material particles of the 4680 cell manufactured by Embodiment 1 were measured before and after the cycles. Specifically, positive electrodes were separated from the cell before the cycles and the cell after 100 cycles, and then the positive electrodes were cut in the thickness direction by an ion milling apparatus. Subsequently, images of the cross-sections of the positive electrodes were captured by SEM, and the minimum value (Min.), the maximum value (Max.), and the average value (Avg.) of the distances between the positive electrode active material particles were measured through an image analysis management system. The measurement results are shown in Table 2 below. Also, FIG. 8 illustrates a measurement image after 100 cycles.

[Table 2]

| Distance ($\mu$m) between particles | Before performing cycles | After 100 cycles |
|---|---|---|
| Min. | 0.8 | 0.8 |
| Max. | 3.0 | 3.3 |
| Avg. | 1.6 | 1.6 |

Through Table 2, Table 3 below and FIG. 8, it may be seen that when the positive electrode active material made of the single particles and/or the quasi-single particles is used, the maximum value of distances between the positive electrode active material particles is as large as 3 $\mu$m or more. Also, as charging and discharging proceed, the distance further increases. For instance, in review of FIG. 8, which is an IAM instrumentation image, various distances are measured at different locations. Table 3 provides a summary of such measurements.

[Table 3]

| Measurement Location | Distance ($\mu$m) |
|---|---|
| 0 | 1.31 |
| 1 | 0.91 |
| 2 | 1.77 |
| 3 | 2.96 |
| 4 | 1.98 |
| 5 | 1.83 |
| 6 | 1.75 |
| 7 | 1.15 |
| 8 | 1.03 |
| 9 | 1.15 |
| 10 | 0.71 |
| 11 | 1.35 |
| 12 | 1.23 |
| 13 | 1.03 |
| 14 | 0.62 |
| 15 | 2.82 |
| 16 | 3.69 |

**Claims**

1.   A lithium secondary battery comprising:

an electrode assembly in which a positive electrode plate, a negative electrode plate, and a separator interposed between the positive electrode plate and the negative electrode plate are wound in one direction;
a battery can in which the electrode assembly is accommodated; and
a sealing body which seals an open end of the battery can,
wherein the positive electrode plate comprises a positive electrode active material layer that comprises a positive electrode active material, a conductive material, and a binder,
the positive electrode active material comprises a lithium nickel-based oxide that has at least one of a single particle or quasi-single particle type, and
the conductive material comprises single-walled carbon nanotubes and bundle-type carbon nanotubes.

2. The lithium secondary battery of claim 1, wherein the positive electrode active material layer comprises the bundle-type carbon nanotubes in an amount of 0.4 wt% to 0.6 wt%.

3. The lithium secondary battery of claim 1, wherein the positive electrode active material layer comprises the single-walled carbon nanotubes in an amount of 0.001 wt% to 0.04 wt%.

4. The lithium secondary battery of claim 1, wherein the positive electrode active material layer comprises the single-walled carbon nanotubes in an amount of 0.01 wt% to 0.02 wt%.

5. The lithium secondary battery of claim 1, wherein the single-walled carbon nanotubes have an average grain size of 2 $\mu$m to 8 $\mu$m, and
the bundle-type carbon nanotubes have an average grain size of 0.5 $\mu$m to 5 $\mu$m.

6. The lithium secondary battery of claim 1, wherein a maximum distance between particles of the positive electrode active material inside the positive electrode active material layer is 2 $\mu$m or more.

7. The lithium secondary battery of claim 1, wherein the lithium nickel-based oxide is present in an amount of 95 wt% to 100 wt%, on a basis of a total weight of the positive electrode active material present in the positive electrode active material layer.

8. The lithium secondary battery of claim 1, wherein the positive electrode active material has $D_{50}$ of 5 $\mu$m or less.

9. The lithium secondary battery of claim 1, wherein the positive electrode active material has $D_{min}$ of 1.0 $\mu$m or more.

10. The lithium secondary battery of claim 1, wherein the positive electrode active material has $D_{max}$ of 12 $\mu$m to 17 $\mu$m.

11. The lithium secondary battery of claim 1, wherein a particle size distribution (PSD) of the positive electrode active material is represented by Equation 1 below and has a value of 3 or less:

$$Particle \quad size \quad distribution \quad (PSD) = (D_{max} - D_{min})/D_{50}$$

[Equation 1].

12. The lithium secondary battery of claim 1, wherein the positive electrode active material has a unimodal particle size distribution that exhibits a single peak in a volume accumulated particle size distribution graph.

13. The lithium secondary battery of claim 1, wherein the lithium nickel-based oxide comprises 80 mol% or more of Ni on a basis of a total number of moles of transition metal in the lithium nickel-based oxide.

14. The lithium secondary battery of claim 1, wherein the lithium nickel-based oxide has a composition represented by Chemical Formula 1 below:

$$Li_aNi_bCo_cM^1_dM^2_eO_2....\qquad [Chemical\ Formula\ 1]$$

where, in Chemical Formula 1, $M^1$ is Mn, Al, or a combination thereof, $M^2$ is Zr, W, Ti, Mg, Ca, Sr, and Ba, $0.8 \leq a \leq 1.2$, $0.83 \leq b < 1$, $0 < c < 0.17$, $0 < d < 0.17$, and $0 \leq e \leq 0.1$.

15. The lithium secondary battery of claim 1, wherein the lithium nickel-based oxide has a primary particle diameter of 0.5 $\mu$m to 5 $\mu$m.

16. The lithium secondary battery of claim 1, wherein the negative electrode plate comprises a silicon-based negative electrode active material.

17. The lithium secondary battery of claim 1, wherein the negative electrode plate comprises a silicon-based negative electrode active material and a carbon-based negative electrode active material.

18. The lithium secondary battery of claim 17, wherein the silicon-based negative electrode active material and the carbon-based negative electrode active material are present in a weight ratio of 1:99 to 20:80.

19. The lithium secondary battery of claim 1, wherein the lithium secondary battery is the cylindrical battery having a ratio of form factor of 0.4 or more.

20. The lithium secondary battery of claim 19, wherein the cylindrical battery is a 46110 cell, a 4875 cell, a 48110 cell, a 4880 cell, or a 4680 cell.

21. The lithium secondary battery of claim 1, wherein each of the positive electrode plate and the negative electrode plate comprises an uncoated portion in which an active material layer is not formed,
wherein at least a portion of the uncoated portion of the positive electrode plate or the negative electrode plate defines an electrode tab.

22. The lithium secondary battery of claim 21, wherein the uncoated portion of the positive electrode plate and the uncoated portion of the negative electrode plate are formed at an end of one side of the positive electrode plate and an end of one side of the negative electrode plate, respectively, along a direction in which the electrode assembly is wound,

wherein the uncoated portion of the positive electrode plate and the uncoated portion of the negative electrode plate are coupled to current collecting plates respectively, and
the current collecting plates are connected to an electrode terminals, respectively.

23. The lithium secondary battery of claim 22, wherein each of the uncoated portion of the positive electrode plate and the uncoated portion of the negative electrode plate is processed in a form of a plurality of segments that are independently bendable, and
at least a portion of each of the plurality of segments are bent toward a winding center of the electrode assembly.

24. The lithium secondary battery of claim 23, wherein at least a portion of the plurality of bent segments are overlapped on an upper end and a lower end of the electrode assembly, and
the current collecting plate is coupled to the plurality of overlapped segments.

25. The lithium secondary battery of claim 21, wherein on the positive electrode plate, an insulating layer is further provided along a direction parallel to a winding direction, which covers a portion of the positive electrode active material layer and a portion of the uncoated portion of the positive electrode plat.

26. A battery pack comprising the lithium secondary battery of any one of claims 1 to 25.

27. An automobile comprising the battery pack of claim 26.

[FIG. 1]

Winding direction

11    10    12

Z
↑
└→X

[FIG. 2]

22
20    21

Z
↑
└→Y

[FIG. 3]

[FIG. 4]

[FIG. 5]

[FIG. 6]

[FIG. 7]

[FIG. 8]

Regulus 1.0kV 3.5mm x5.00K LA50(UL)     10.0 μm

## INTERNATIONAL SEARCH REPORT

| International application No. |
| --- |
| **PCT/KR2023/014562** |

**A. CLASSIFICATION OF SUBJECT MATTER**

**H01M 10/0587**(2010.01)i; **H01M 4/525**(2010.01)i; **H01M 4/505**(2010.01)i; **H01M 4/62**(2006.01)i; **H01M 4/38**(2006.01)i; **H01M 50/107**(2021.01)i; **H01M 50/131**(2021.01)i; **H01M 50/533**(2021.01)i; **H01M 50/538**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0587(2010.01); H01M 10/04(2006.01); H01M 10/052(2010.01); H01M 4/13(2010.01); H01M 4/131(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 전극 조립체(electrode assembly), 양극 활물질층(positive electrode active material layer), 단입자(single particle), 유사-단입자(quasi-single particle), 단일벽 탄소나노튜브(single wall carbon nanotube), 번들형 탄소나노튜브(bundle type carbon nanotube)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2017-0063402 A (LG CHEM, LTD.) 08 June 2017 (2017-06-08) See paragraphs [0061], [0069]-[0072], [0076], [0078], [0081], [0083], [0096], [0111], [0144], [0157], [0164] and [0180]-[0181], claim 11 and figures 1a-1b. | 1-7,12,14,16-18,26-27 |
| Y | | 8-11,13,15,19-25 |
| Y | KR 10-2021-0093173 A (SUMITOMO CHEMICAL CO., LTD.) 27 July 2021 (2021-07-27) See paragraphs [0086], [0166]-[0174] and [0348]. | 8-11,13,15,19-20 |
| Y | KR 10-2020-0041625 A (SAMSUNG SDI CO., LTD.) 22 April 2020 (2020-04-22) See paragraphs [0034], [0043] and [0079] and figures 1-2. | 21-25 |
| A | KR 10-2021-0019389 A (LG CHEM, LTD.) 22 February 2021 (2021-02-22) See claims 1-10 and figure 1. | 1-27 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 December 2023** | **02 January 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/014562**

### C.    DOCUMENTS CONSIDERED TO BE RELEVANT

| Category* | Citation of document, with indication, where appropriate, of the relevant passages | Relevant to claim No. |
|---|---|---|
| A | KR 10-2022-0059927 A (ADVANCED NANO PRODUCTS CO., LTD.) 10 May 2022 (2022-05-10)<br>See claims 1-19. | 1-27 |

## INTERNATIONAL SEARCH REPORT
### Information on patent family members

International application No.

**PCT/KR2023/014562**

| Patent document cited in search report | | | Publication date (day/month/year) | Patent family member(s) | | | Publication date (day/month/year) |
|---|---|---|---|---|---|---|---|
| KR | 10-2017-0063402 | A | 08 June 2017 | CN | 108028355 | A | 11 May 2018 |
| | | | | CN | 108028355 | B | 26 March 2021 |
| | | | | EP | 3370279 | A1 | 05 September 2018 |
| | | | | EP | 3370279 | A4 | 19 December 2018 |
| | | | | EP | 3370279 | B1 | 01 January 2020 |
| | | | | JP | 2018-523902 | A | 23 August 2018 |
| | | | | JP | 6620221 | B2 | 11 December 2019 |
| | | | | KR | 10-1938237 | B1 | 15 January 2019 |
| | | | | US | 11196051 | B2 | 07 December 2021 |
| | | | | US | 2018-0248195 | A1 | 30 August 2018 |
| | | | | WO | 2017-095151 | A1 | 08 June 2017 |
| KR | 10-2021-0093173 | A | 27 July 2021 | CN | 112768680 | A | 07 May 2021 |
| | | | | EP | 3852170 | A1 | 21 July 2021 |
| | | | | EP | 3852170 | B1 | 26 October 2022 |
| | | | | JP | 2021-114408 | A | 05 August 2021 |
| | | | | JP | 6742547 | B1 | 19 August 2020 |
| | | | | KR | 10-2348193 | B1 | 07 January 2022 |
| | | | | US | 11296318 | B2 | 05 April 2022 |
| | | | | US | 2021-0226209 | A1 | 22 July 2021 |
| KR | 10-2020-0041625 | A | 22 April 2020 | CN | 113169369 | A | 23 July 2021 |
| | | | | EP | 3866241 | A1 | 18 August 2021 |
| | | | | EP | 3866241 | A4 | 14 September 2022 |
| | | | | US | 2021-0344033 | A1 | 04 November 2021 |
| | | | | WO | 2020-075990 | A1 | 16 April 2020 |
| KR | 10-2021-0019389 | A | 22 February 2021 | CN | 113474912 | A | 01 October 2021 |
| | | | | KR | 10-2459883 | B1 | 28 October 2022 |
| | | | | US | 2022-0140320 | A1 | 05 May 2022 |
| | | | | WO | 2021-029652 | A1 | 18 February 2021 |
| KR | 10-2022-0059927 | A | 10 May 2022 | WO | 2023-080366 | A1 | 11 May 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220121174